(19) **Europäisches Patentamt**
**European Patent Office**
**Office européen des brevets**

(11) **EP 4 440 884 B1**

(12) **EUROPÄISCHE PATENTSCHRIFT**

(45) Veröffentlichungstag und Bekanntmachung des Hinweises auf die Patenterteilung:
**13.05.2026 Patentblatt 2026/20**

(21) Anmeldenummer: **22809419.9**

(22) Anmeldetag: **26.10.2022**

(51) Internationale Patentklassifikation (IPC):
**B60R 25/20** (2013.01)     **B60W 40/09** (2012.01)
**B60R 16/02** (2006.01)

(52) Gemeinsame Patentklassifikation (CPC):
**B60R 16/02; B60R 25/20**

(86) Internationale Anmeldenummer:
**PCT/EP2022/079952**

(87) Internationale Veröffentlichungsnummer:
**WO 2023/094099 (01.06.2023 Gazette 2023/22)**

(54) **VERFAHREN ZUR IDENTIFIZIERUNG DES FAHRERS EINES FAHRZEUGS**

METHOD FOR IDENTIFYING THE DRIVER OF A VEHICLE

PROCÉDÉ D'IDENTIFICATION DU CONDUCTEUR D'UN VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.11.2021 DE 102021213396**

(43) Veröffentlichungstag der Anmeldung:
**09.10.2024 Patentblatt 2024/41**

(73) Patentinhaber: **Robert Bosch GmbH**
**70442 Stuttgart (DE)**

(72) Erfinder:
• **PAULY, Reena**
**72070 Tuebingen (DE)**
• **HENZLER, Markus**
**70197 Stuttgart (DE)**

(56) Entgegenhaltungen:
**EP-B1- 2 261 096          EP-B1- 2 962 909**
**DE-A1- 102016 218 719    DE-A1- 102018 211 609**
**US-A1- 2018 208 204**

**Beschreibung**

Die Erfindung bezieht sich auf ein Verfahren zur Identifizierung des Fahrers eines Fahrzeugs anhand von Kenn- oder Zustandsgrößen des Fahrzeugs.

Stand der Technik

Aus der DE 10 2016 218 719 A1 ist ein System zur Identifizierung des Fahrers eines Personenkraftwagens oder Lastkraftwagens anhand von Betätigungsmustern bekannt. Die Betätigungsmuster werden mithilfe eines Beschleunigungssensors erfasst, der in ein Bedienelement integriert ist, welches von dem Fahrer betätigt wird. Zur Identifizierung des Fahrers wird das erfasste Betätigungsmuster mit gespeicherten Betätigungsmustern verglichen.

In der US 10 417 838 B2 wird ein System zur Klassifizierung von Fahrmanövern wie beispielsweise Abbiegemanöver, Kreiseldurchfahrten oder Bremsmanöver beschrieben. Die Klassifizierung erfolgt anhand verschiedener fahrzeugbezogener Messgrößen wie zum Beispiel Fahrzeuggeschwindigkeit, Beschleunigungen und Positionsbestimmung des Fahrzeugs anhand GPS.

In der US 2010/0209890 A1 wird die Klassifizierung des Niveaus von Fahrkenntnissen unter Verwendung neuronaler Netze beschrieben.

Aus der CN 111 738 337 A ist es bekannt, den Ablenkungszustand eines Fahrers in verschiedenen Verkehrssituationen basierend auf Augenbewegungen und Fahrdaten mithilfe eines Long-Short-Term-Memory-Netzwerks durchzuführen.

Aus der EP 2 261 096 ist ein Verfahren zur Identifizierung des Fahrers eines Fahrzeugs bekannt.

Offenbarung der Erfindung

Das erfindungsgemäße Verfahren nach Anspruch 1 kann zur Identifizierung des Fahrers eines Fahrzeugs, insbesondere eines motorisierten Fahrzeugs verwendet werden. Bei dem Fahrzeug handelt es sich um Einspurfahrzeug wie beispielsweise ein Motorrad oder ein Motorroller oder um ein Zweispurfahrzeug, insbesondere um einen Personenkraftwagen oder einen Lastkraftwagen.

Mithilfe des erfindungsgemäßen Verfahrens kann der aktuelle Fahrer eines Fahrzeugs mit einem oder mehreren Fahrern aus einem Referenzpool durch Vergleich identifiziert werden. Es ist sowohl eine positive Identifizierung für den Fall möglich, dass der aktuelle Fahrer mit einem der Fahrer aus dem Referenzpool übereinstimmt, als auch eine negative Identifizierung für den Fall, dass der aktuelle Fahrer mit keinem Fahrer aus dem Referenzpool übereinstimmt.

Das Verfahren läuft in zwei Schritten ab: zunächst werden in einer Trainingsphase fahrerindividuelle Kenn- oder Zustandsgrößen für einen oder mehrere Fahrer ermittelt, die einen Referenzpool bilden. Die Trainingsphase läuft während einer Fahrt des Fahrzeugs ab. Hierbei werden die aktuellen Kenn- oder Zustandsgrößen im Fahrzeug, welche sich als Reaktion auf die Fahrerbetätigung einstellen, ermittelt, insbesondere mithilfe einer im Fahrzeug verbauten Sensorik.

Mithilfe eines Klassifizierungsmodells werden aus den Kenn- oder Zustandsgrößen fahrerindividuelle Klassifizierungsparameter bestimmt.

Bei den betrachteten Kenngrößen handelt es sich insbesondere um fahrerindividuelle Größen wie beispielsweise um Getriebeschaltpunkte, Bremsdrücke oder dergleichen. Bei den betrachteten Zustandsgrößen, die über eine fahrzeugeigene Sensorik ermittelt werden, handelt es sich um zum Beispiel um translatorische und rotatorische Zustandsgrößen in oder um Fahrzeuglängs-, Fahrzeugquer- und Fahrzeughochrichtung auf Lage-, Geschwindigkeits- und/oder Beschleunigungsebene.

In einer sich eine die Trainingsphase anschließende Klassifizierungsphase wird das trainierte Klassifizierungsmodell mit fahrerindividuellen Kenn- oder Zustandsgrößen gefüttert, welche im Fahrzeug während der Fahrt mit einem aktuellen Fahrer ermittelt werden. Hierbei werden verhältnismäßig kurze Subsequenzen der Kenn- oder Zustandsgrößen verwendet, die in das trainierte Klassifizierungsmodell einfließen, wobei die Subsequenzen üblicherweise kürzer sind als die Trainingssequenzen, mit denen in der Trainingsphase das Klassifizierungsmodell für einen oder mehrere Fahrer trainiert wurde.

Die Trainingssequenzen der Trainingsphase weisen typischerweise eine zeitliche Länge von beispielsweise mehreren Minuten auf, wohingegen die Subsequenzen aus der Klassifizierungsphase erheblich kürzer sind als die Trainingssequenzen, beispielsweise nur maximal ein Zehntel betragen, und typischerweise nur eine zeitliche Länge von wenigen Sekunden, beispielsweise maximal 10 Sekunden aufweisen. Die verschiedenen Subsequenzen können sich vollständig voneinander unterscheiden, indem beispielsweise nur Subsequenzen aus unterschiedlichen Zeiträumen betrachtet werden, oder es werden sich zeitlich überschneidende Subsequenzen verwendet. Die Zeitspanne, die von allen betrachteten Subsequenzen abdeckt wird, ist in der Regel kürzer als die Zeitspanne, über die sich die Trainingssequenz erstreckt.

Der Trainingsphase muss grundsätzlich nur einmal durchlaufen werden, um den Referenzpool zu bilden. Die Klassifizierungsphase kann beliebig oft durchlaufen werden, insbesondere nach jedem Neustart des Fahrzeugs, um den aktuellen Fahrer zu identifizieren. Es ist aber auch möglich, die Trainingsphase zur Erweiterung des Referenzpools um weitere Fahrer wiederholt zu durchlaufen. Außerdem kann die Trainingsphase zur Verbesserung der Klassifizierung der Parameter nach erfolgter Identifizierung des aktuellen Fahrers erneut durchlaufen werden, gegebenenfalls über die gesamte aktuelle Fahrzeit mit dem aktuellen Fahrer.

In der Klassifizierungsphase werden über mehrere Subsequenzen fahrerindividuelle Kenn- oder Zustandsgrößen ermittelt. Das trainierte Klassifizierungsmodell wird mit jeder Subsequenz gefüttert, aus dem eine auf die jeweilige Subsequenz bezogene Übereinstimmungswahrscheinlichkeit mit einer Trainingssequenz eines Fahrers aus dem Referenzpool bestimmt wird. Die Übereinstimmungswahrscheinlichkeiten mehrerer Subsequenzen können anschließend zu einer Gesamtwahrscheinlichkeit zusammengefasst werden, mit der der aktuelle Fahrer aus dem Referenzpool identifiziert wird.

Diese Vorgehensweise hat den Vorteil, dass eine Klassifizierungsrate mit hoher Genauigkeit erzielt werden kann. Die Klassifizierung kann in kurzer Zeit durchgeführt werden, ohne dass dies zu einer Beeinträchtigung bei der Klassifizierungsrate führt. Bei dem Verfahren wird in der Klassifizierungsphase eine Akkumulation der Ergebnisse durchgeführt, die sich auf jeweils eine Subsequenz beziehen. Dies erlaubt die schnelle und zugleich genaue Fahreridentifizierung.

Die Übereinstimmungswahrscheinlichkeit jeder Subsequenz kann, gemäß vorteilhafter Ausführung, als eine Funktion der Kenn- oder Zustandsgrößen ermittelt werden, wobei die Funktion das Klassifizierungsmodell repräsentiert. Die aktuellen Kenn- oder Zustandsgrößen der betrachteten Subsequenz fließen in das Klassifizierungsmodell ein, das als Ergebnis eine Übereinstimmungswahrscheinlichkeit für diese Subsequenz liefert. Dieser Vorgang wird für mehrere unterschiedliche Subsequenzen mit Kenn- oder Zustandsgrößen durchgeführt, wobei für jede Subsequenz eine Übereinstimmungswahrscheinlichkeit ermittelt wird. Aus der Akkumulation der Übereinstimmungswahrscheinlichkeiten kann die Gesamtwahrscheinlichkeit berechnet werden, über die der aktuelle Fahrer identifiziert wird.

Für das Klassifizierungsmodell kommen verschiedene mathematische Zusammenhänge in Betracht. Gemäß einer vorteilhaften Ausführung ist das Klassifizierungsmodell als ein neuronales Netz ausgebildet. Da die zugeführten Kenn- oder Zustandsgrößen zeitlich geordnet sind, kann als Klassifizierungsmodell ein rekurrierendes Netzwerk verwendet werden, beispielsweise ein Long-Short-Term-Memory-Netzwerk (LSTM). Auch andere Klassifizierungsmethoden wie beispielsweise ein k-nächste-Nachbarn-Algorithmus sind möglich.

Am Ausgang des Klassifizierungsmodells liegt, gemäß weiterer vorteilhafter Ausführung, für jede Subsequenz eine diskrete Wahrscheinlichkeit an, wobei sämtliche diskrete Wahrscheinlichkeiten zu einer Gesamtwahrscheinlichkeit zusammengefasst werden. Dies erfolgt insbesondere durch Addition der diskreten Wahrscheinlichkeiten, die den Subsequenzen zugeordnet sind. Im Ergebnis erhält man für jeden Fahrer des Referenzpools einen Wahrscheinlichkeitswert, mit dem der aktuelle Fahrer dem betreffenden Fahrer aus dem Referenzpool entspricht. Der aktuelle Fahrer wird demjenigen Fahrer aus dem Referenzpool mit der höchsten Wahrscheinlichkeit zugeordnet.

Nach der Identifizierung oder Nicht-Identifizierung des aktuellen Fahrers können verschiedene Maßnahmen getroffen werden. Ergibt die Klassifizierung, dass der aktuelle Fahrer keine Entsprechung im Referenzpool hat, so kann im Fahrzeug beispielsweise eine Wegfahrsperre aktiviert werden. Falls das Fahrzeug momentan in Bewegung ist, kann gegebenenfalls ein Warnsignal erzeugt werden, das im Fahrzeug angezeigt und/oder nach außen übertragen wird, beispielsweise einer Meldestelle zugeleitet wird. Im Fall eines autonom oder teilautonom fahrenden Fahrzeugs kann dieses selbsttätig zu einem Halt gebracht werden.

Falls bei der Fahrerklassifizierung eine eindeutige Zuordnung zu einem Fahrer aus dem Referenzpool erfolgt, können fahrerindividuelle Einstellungen im Fahrzeug vorgenommen werden. Hierbei werden zum Beispiel Parametereinstellungen in Fahrerassistenzsystemen, in der Motoreinstellung, in der Getriebeeinstellung oder in der Fahrwerkseinstellung individuell angepasst. Falls der aktuelle Fahrer keinem der Fahrer aus dem Referenzpool entspricht, können Standard-Einstellungen verwendet werden.

Die Erfindung bezieht sich außerdem auf ein Steuergerät, das Mittel enthält, die zur Durchführung des vorbeschriebenen Verfahrens ausgestaltet sind. Die Mittel umfassen mindestens eine Speichereinheit, mindestens eine Recheneinheit, einen Steuergeräteeingang und einen Steuergeräteausgang. Dem Steuergerät sind Kenn- oder Zustandsgrößen des Fahrzeugs als Eingangsgrößen zuführbar. Im Steuergerät ist ein Identifizierungssignal erzeugbar ist, das den aktuellen Fahrer aus dem Referenzpool identifiziert. Über das Steuergerät können Systeme im Fahrzeug angesteuert werden, zum Beispiel die Wegfahrsperre, die Fahrerassistenzsysteme, der Motor, das Getriebe oder das Fahrwerk.

Die Erfindung bezieht sich auch auf ein Fahrzeug, das mit einem vorbeschriebenen Steuergerät ausgestattet ist. Bei dem Fahrzeug handelt es sich entweder um ein Einspurfahrzeug, zum Beispiel ein Motorrad, oder um ein Zweispurfahrzeug, zum Beispiel ein Personenkraftwagen oder ein Lastkraftwagen.

Die Erfindung bezieht sich desweiteren auf ein Computerprogrammprodukt mit einem Programmcode, der dazu ausgelegt ist, die vorbeschriebenen Verfahrensschritte auszuführen. Das Computerprogrammprodukt läuft in dem vorbeschriebenen Steuergerät ab.

Weitere Vorteile und zweckmäßige Ausführungen sind den weiteren Ansprüchen, der Figurenbeschreibung und den Zeichnungen zu entnehmen. Es zeigen:

Fig. 1 ein Motorrad, das mit einem Steuergerät zur Fahreridentifizierung ausgestattet ist,
Fig. 2 ein Ablaufschema mit Verfahrensschritten zur Fahreridentifizierung.

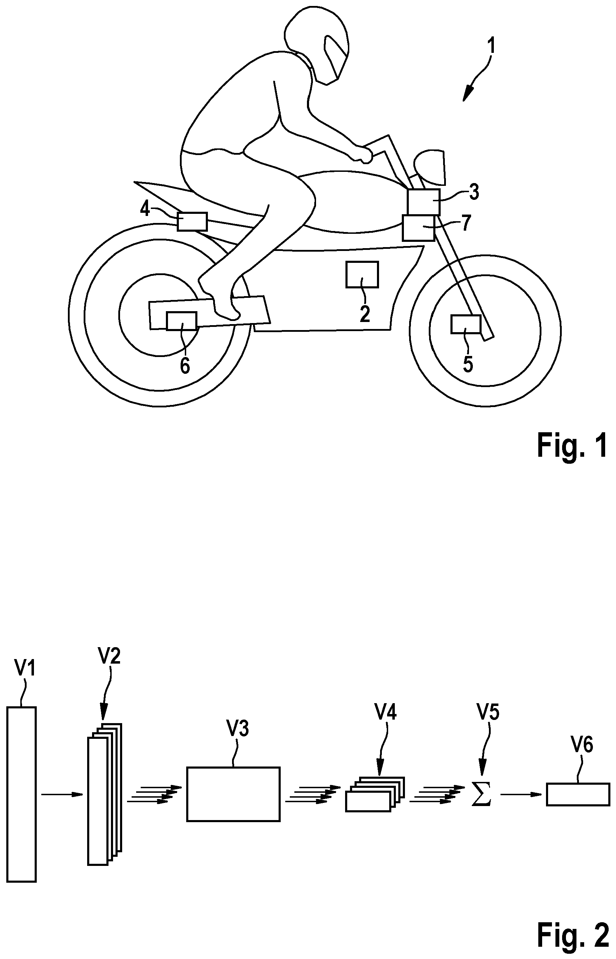

In Fig. 1 ist ein als Motorrad 1 ausgeführtes Einspurfahrzeug schematisch dargestellt. Das Motorrad 1 ist in an sich bekannter Weise mit einem hydraulischen Bremssystem 2 versehen, das eine vordere Bremseinheit am Vorderrad, eine hintere Bremseinheit am Hinterrad sowie ein Bremsensteuergerät und eine Hydraulikpumpe zur Einstellung des hydraulischen Bremsdrucks umfasst. In dem Bremsensteuergerät ist Antiblockiersystem realisiert, dem die Funktion eines Fahrerassistenzsystems zukommt.

Das Motorrad 1 ist desweiteren mit einem Antriebsmotor versehen, dem ein Motosteuergerät 3 zugeordnet ist. Des Weiteren ist das Motorrad 1 mit Sensoriken ausgestattet, die eine Inertialsensorik 4 sowie Drehzahlfühler 5 und 6 am Vorderrad sowie am Hinterrad umfasst. Einer Auswerteeinheit 7 am Motorsteuergerät 3 werden die Sensordaten der Sensoriken 4, 5, 6 als Eingangssignale zugeführt, wobei in der Auswerteeinheit 7 eine Fahrerklassifizierung durchgeführt werden kann. Die Auswerteeinheit 7 kann Bestandteil des Motorsteuergeräts 3 sein oder ein eigenes Steuergerät bilden.

Über die Drehzahlfühler 5, 6 wird die Raddrehzahl am Vorderrad und am Hinterrad erfasst. Über die Inertialsensorik 4 können Fahrzustandsgrößen des Motorrades 1 erfasst werden, unter anderem die Fahrzeuggeschwindigkeit, die Längs- und Querbeschleunigung sowie die Drehraten um die Fahrzeuglängsachse, die Fahrzeugquerachse und die Fahrzeughochachse.

In Fig. 2 ist ein Ablaufschema mit Verfahrensschritten zur Identifizierung des aktuellen Fahrers auf dem Motorrad dargestellt.

Voraussetzung für die Identifizierung ist das Vorhandensein eines Referenzpools mit Klassifizierungsparametern für mindestens einen, vorzugsweise für mehrere unterschiedliche Fahrer. Der Referenzpool wird vorab anhand der Fahrdaten der Fahrer erstellt, indem für jeden Fahrer des Referenzpools während der Fahrt Trainingssequenzen mit Kenn- oder Zustandsgrößen des Fahrzeugs ermittelt und aus einem Klassifizierungsmodell f(x), das mit den Trainingssequenzen der Kenn- oder Zustandsgrößen x trainiert wird, fahrerindividuelle Klassifizierungsparameter bestimmt werden, welche abgespeichert werden. Die Kenn- oder Zustandsgrößen des Fahrzeugs werden mit einer fahrzeugeigenen Sensorik ermittelt und betreffen beispielsweise Getriebeschaltpunkte und Bremsdrücke sowie Geschwindigkeits- und Beschleunigungsgrößen.

Das Klassifizierungsmodell f(x) mit den Kenn- oder Zustandsgrößen x ist vorzugsweise als ein neuronales Netz ausgebildet, insbesondere als ein rekurrierendes Netzwerk wie zum Beispiel ein Long-Short-Term-Memory-Netzwerk (LSTM).

Der Referenzpool kann fortlaufend um weitere Fahrer ergänzt werden, indem das Klassifizierungsmodell f(x) mit den Trainingssequenzen dieser Fahrer, bestehend aus Kenn- oder Zustandsgrößen des Fahrzeugs, trainiert wird.

In einem ersten Verfahrensschritt V1 wird eine Sequenz der Länge $l_2$ mit Kenn- oder Zustandsgrößen des aktuellen Fahrers im Fahrzeug sensorisch ermittelt. Die Länge $l_2$ der Sequenz bezieht sich auf die Anzahl an Daten in dieser Sequenz und ist in der Regel kürzer als die Trainingssequenzen. In einem folgenden Verfahrensschritt V2 wird die Sequenz der Länge $l_2$ in mehrere Subsequenzen der Länge $l_1$ unterteilt, wodurch man insgesamt $l_2/l_1$ Subsequenzen erhält.

Im nächsten Verfahrensschritt V3 wird jede Subsequenz der Länge $l_1$ mit den Kenn- oder Zustandsgrößen x in das Klassifizierungsmodell f(x) eingegeben, das im folgenden Verfahrensschritt V4 einen diskreten Wahrscheinlichkeitswert $P_{driver, subsequence}$ für die betreffende Subsequenz liefert:

$$P_{driver, subsequence} = f(x)$$

Man erhält auf diese Weise die gleiche Anzahl an Wahrscheinlichkeitswerten $P_{driver, subsequence}$ wie die Anzahl $l_2/l_1$ der Subsequenzen. Es werden hierbei die höchsten Wahrscheinlichkeitswerte betrachtet, die einem Fahrer aus dem Referenzpool zugeordnet werden können.

Im nächsten Schritt V5 wird eine Gesamtwahrscheinlichkeit $P_{driver, sequence}$ durch Addition der diskreten Wahrscheinlichkeiten $P_{driver, subsequence}$ für jede Subsequenz gebildet:

$$P(\text{driver}, \text{sequence}) = \sum_{n=1}^{n=l2/l1} P(driver, subsequence)$$

Aus der Gesamtwahrscheinlichkeit $P_{driver, sequence}$ kann im Verfahrensschritt V6 derjenige Fahrer *driver* aus dem Referenzpool identifiziert werden, mit dem der aktuelle Fahrer den höchsten Wert der Gesamtwahrscheinlichkeit

$P_{\text{driver, sequence}}$ aufweist:

$$driver = argmax_{driver} P(driver, sequence)$$

Es kann zweckmäßig sein, für die Identifizierung eines Fahrers einen Wahrscheinlichkeitsgrenzwert vorzugeben, der für die eindeutige Identifizierung überschritten werden muss. Hierdurch werden Fehlidentifizierungen für den Fall vermieden, dass der aktuelle Fahrer keinem Fahrer aus dem Referenzpool entspricht (Nicht-Identifizierung).

In Abhängigkeit der Identifizierung bzw. Nicht-Identifizierung des aktuellen Fahrers können verschiedene Maßnahmen getroffen werden. Sofern der aktuelle Fahrer keine Entsprechung im Referenzpool hat, kann im Fahrzeug eine Wegfahrsperre aktiviert werden. Falls das Fahrzeug momentan in Bewegung ist, kann ein Warnsignal erzeugt werden und/oder das Fahrzeug selbsttätig zu einem Halt gebracht werden.

Im Fall einer eindeutigen Zuordnung zu einem Fahrer aus dem Referenzpool können fahrerindividuelle Einstellungen im Fahrzeug vorgenommen werden, zum Beispiel Parametereinstellungen in Fahrerassistenzsystemen, in der Motoreinstellung, in der Getriebeeinstellung oder in der Fahrwerkseinstellung. Bei Nicht-Identifizierung des aktuellen Fahrers können Standard-Einstellungen verwendet werden.

**Patentansprüche**

1. Computerimplementiertes Verfahren zur Identifizierung des Fahrers eines Fahrzeugs anhand von Kenn- oder Zustandsgrößen des Fahrzeugs, wobei

   - in einer Trainingsphase für einen oder mehrere Fahrer, die einen Referenzpool bilden, während einer Fahrt fahrerindividuelle Kenn- oder Zustandsgrößen $(x)$ des Fahrzeugs ermittelt werden und aus einem Klassifizierungsmodell $(f(x))$ mit Trainingssequenzen der Kenn- oder Zustandsgrößen $(x)$ fahrerindividuelle Klassifizierungsparameter des Klassifizierungsmodells $(f(x))$ bestimmt werden,
   - in einer sich anschließenden Klassifizierungsphase während einer Fahrt fahrerindividuelle Kenn- oder Zustandsgrößen $(x)$ ermittelt und mehrere Subsequenzen der Kenn- oder Zustandsgrößen $(x)$ dem Klassifizierungsmodell $(f(x))$ zugeführt und eine Übereinstimmungswahrscheinlichkeit $(P_{\text{driver, subsequence}})$ für die Übereinstimmung der Subsequenz mit der Trainingssequenz bestimmt wird, wobei die Übereinstimmungswahrscheinlichkeiten $(P_{\text{driver, subsequence}})$ mehrerer Subsequenzen zu einer Gesamtwahrscheinlichkeit $(P_{\text{driver, sequence}})$ zusammengefasst werden, mit der der aktuelle Fahrer aus dem Referenzpool identifiziert wird,
   - wobei das Klassifizierungsmodell $(f(x))$ als neuronales Netz ausgebildet ist.

2. Verfahren nach Anspruch 1, **dadurch gekennzeichnet, dass** die Übereinstimmungswahrscheinlichkeit $(P_{\text{driver, subsequence}})$ mit dem Klassifizierungsmodell $(f(x))$ gemäß

$$P_{\text{driver, subsequence}} = f(x)$$

   zusammenhängt, wobei

   $P_{\text{driver, subsequence}}$ die Übereinstimmungswahrscheinlichkeit
   $f(x)$ das Klassifizierungsmodell
   $x$ die Kenn- oder Zustandsgrößen

   bedeuten.

3. Verfahren nach einem der Ansprüche 1 oder 2, **dadurch gekennzeichnet, dass** das Klassifizierungsmodell $(f(x))$ als rekurrierendes Netzwerk ausgebildet ist, beispielsweise als Long-Short-Term-Memory-Netzwerk (LSTM).

4. Verfahren nach einem der Ansprüche 1 bis 3, **dadurch gekennzeichnet, dass** am Ausgang des Klassifizierungsmodells $(f(x))$ für jede Subsequenz eine diskrete Wahrscheinlichkeit $(P_{\text{driver, subsequence}})$ anliegt, die zu der Gesamtwahrscheinlichkeit $(P_{\text{driver, sequence}})$ zusammengefasst werden.

5. Verfahren nach Anspruch 4, **dadurch gekennzeichnet, dass** die Gesamtwahrscheinlichkeit $(P_{\text{driver, sequence}})$ durch Addition der diskreten Wahrscheinlichkeiten $(P_{\text{driver, subsequence}})$ für jede Subsequenz gebildet wird:

$$P(\text{driver}, \text{sequence}) = \sum_{n=1}^{n=!\,\prime\prime/!1} P(\text{driver}, \text{subsequence})$$

6. Verfahren nach einem der Ansprüche 1 bis 5, **dadurch gekennzeichnet, dass** derjenige Fahrer aus dem Referenzpool identifiziert wird, mit dem der aktuelle Fahrer den höchsten Wert der Gesamtwahrscheinlichkeit ($P_{\text{driver, sequence}}$) aufweist:

$$\text{driver} - argmax_{\text{driver}} P(\text{driver}, \text{sequence})$$

7. Verfahren nach einem der Ansprüche 1 bis 6, **dadurch gekennzeichnet, dass** für den Fall, dass keine Übereinstimmung des aktuellen Fahrers mit einem Fahrer aus dem Referenzpool stattfindet, eine Wegfahrsperre im Fahrzeug aktiviert wird.

8. Verfahren nach einem der Ansprüche 1 bis 7, **dadurch gekennzeichnet, dass** nach der Identifizierung des Fahrers fahrerindividuelle Einstellungen im Fahrzeug vorgenommen werden.

9. Steuergerät in einem Fahrzeug zur Durchführung des Verfahrens nach einem der Ansprüche 1 bis 8, wobei dem Steuergerät (3, 7) Kenn- oder Zustandsgrößen (x) des Fahrzeugs als Eingangsgrößen zuführbar sind und im Steuergerät (3, 7) ein Signal erzeugbar ist, das den aktuellen Fahrer aus dem Referenzpool identifiziert.

10. Fahrzeug mit einem Steuergerät nach Anspruch 9.

11. Computerprogrammprodukt mit einem Programmcode, der dazu ausgelegt ist, Schritte des Verfahrens nach einem der Ansprüche 1 bis 8 auszuführen, wenn das Computerprogrammprodukt in einem Steuergerät (3, 7) gemäß Anspruch 9 abläuft.

## Claims

1. Computer-implemented method for identifying the driver of a vehicle based on characteristic or state variables of the vehicle, wherein

   - in a training phase for one or more drivers forming a reference pool, driver-specific characteristic or state variables (x) of the vehicle are determined during a journey and driver-specific classification parameters of a classification model (f(x)) having training sequences of the characteristic or state variables (x) are determined from the classification model (f(x)),
   - in a subsequent classification phase, driver-specific characteristic or state variables (x) are determined during a journey and a plurality of subsequences of the characteristic or state variables (x) are supplied to the classification model (f(x)) and a match probability ($P_{\text{driver, subsequence}}$) is determined for the match between the sequence and the training sequence, wherein the match probabilities ($P_{\text{driver, subsequence}}$) of a plurality of subsequences are combined to form a total probability ($P_{\text{driver, sequence}}$) that is used to identify the current driver from the reference pool,
   - wherein the classification model (f(x)) is designed as a neural network.

2. Method according to Claim 1, **characterized in that** the match probability ($P_{\text{driver, subsequence}}$) is associated with the classification model (f(x)) according to

$$P_{\text{driver, subsequence}} = f(x)$$

   , where

   $P_{\text{driver, subsequence}}$ means the match probability
   f(x) means the classification model
   X means the characteristic or state variables.

3. Method according to either of Claims 1 and 2, **characterized in that** the classification model (f(x)) is designed as a recurrent network, for example as a long short-term memory network (LSTM).

4. Method according to one of Claims 1 to 3, **characterized in that** there is a discrete probability ($P_{driver, subsequence}$) at the output of the classification model ($f(x)$) for each subsequence, which probabilities are combined to form the total probability ($P_{driver, sequence}$).

5. Method according to Claim 4, **characterized in that** the total probability ($P_{driver, sequence}$) is formed by adding the discrete probabilities ($P_{driver, subsequence}$) for each subsequence:

$$P(driver, sequence) = \sum_{n=1}^{n=12/l1} P(driver, subsequence)$$

6. Method according to one of Claims 1 to 5, **characterized in that** that driver from the reference pool with whom the current driver has the highest value of the total probability ($P_{driver, sequence}$) is identified:

$$driver \cdot argmax_{driver} P(driver, sequence)$$

7. Method according to one of Claims 1 to 6, **characterized in that**, if the current driver does not match a driver from the reference pool, an immobilizer in the vehicle is activated.

8. Method according to one of Claims 1 to 7, **characterized in that**, after the driver has been identified, driver-specific settings are made in the vehicle.

9. Control unit in a vehicle for carrying out the method according to one of Claims 1 to 8, wherein characteristic or state variables ($x$) of the vehicle can be supplied to the control unit (3, 7) as input variables and a signal which identifies the current driver from the reference pool can be generated in the control unit (3, 7).

10. Vehicle having a control unit according to Claim 9.

11. Computer program product comprising program code designed to carry out steps of the method according to one of Claims 1 to 8 when the computer program product runs in a control unit (3, 7) according to Claim 9.

**Revendications**

1. Procédé mis en œuvre par ordinateur pour l'identification du conducteur d'un véhicule sur la base de grandeurs caractéristiques ou d'état du véhicule, dans lequel

    - lors d'une phase d'apprentissage, pour un ou plusieurs conducteurs qui forment un groupe de référence, des grandeurs caractéristiques ou d'état ($x$) du véhicule individuelles au conducteur sont déterminées au cours d'un trajet et, à partir d'un modèle de classification ($f(x)$) contenant des séquences d'apprentissage des grandeurs caractéristiques ou d'état ($x$), des paramètres de classification individuels au conducteur du modèle de classification ($f(x)$) sont déterminés,
    - lors d'une phase de classification ultérieure, pendant un trajet, des grandeurs caractéristiques ou d'état ($x$) individuelles au conducteur sont déterminées et plusieurs sous-séquences des grandeurs caractéristiques ou d'état ($x$) sont fournies au modèle de classification ($f(x)$) et une probabilité de concordance ($P_{driver, subsequence}$) pour la concordance de la sous-séquence avec la séquence d'apprentissage est déterminée, les probabilités de concordance ($P_{driver, subsequence}$) d'une pluralité de sous-séquences étant combinées pour former une probabilité globale ($P_{driver, subsequence}$) au moyen de laquelle le conducteur actuel provenant du groupe de référence est identifié,
    - le modèle de classification ($f(x)$) étant conçu sous la forme d'un réseau neuronal.

2. Procédé selon la revendication 1, **caractérisé en ce que** la probabilité de concordance ($P_{driver, subsequence}$) est liée au modèle de classification ($f(x)$) conformément à

$$P_{driver, subsequence} = f(x)$$

où

P$_{driver, subsequence}$ désigne la probabilité de concordance
f(x) désigne le modèle de classification
x désigne les grandeurs caractéristiques ou d'état.

3. Procédé selon l'une quelconque des revendications 1 ou 2, **caractérisé en ce que** le modèle de classification (f(x)) est conçu sous la forme d'un réseau récurrent, par exemple sous la forme d'un réseau à mémoire à court et long terme (LSTM).

4. Procédé selon l'une quelconque des revendications 1 à 3, **caractérisé en ce qu'**une probabilité discrète (P$_{driver, subsequence}$) est obtenue à la sortie du modèle de classification (f(x)) pour chaque sous-séquence, lesquelles sont combinées pour former la probabilité globale (P$_{driver, subsequence}$).

5. Procédé selon la revendication 4, **caractérisé en ce que** la probabilité globale (P$_{driver, sequence}$) est déterminée par l'addition des probabilités discrètes (P$_{driver, sequence}$) pour chaque sous-séquence :

$$P(driver, sequence) = \sum_{n=1}^{n=12/l1} P(driver, subsequence)$$

6. Procédé selon l'une quelconque des revendications 1 à 5, **caractérisé en ce qu'**on identifie au sein du groupe de référence le conducteur pour lequel le conducteur actuel présente la valeur la plus élevée de la probabilité globale (P$_{driver, sequence}$) selon :

$$driver - argmax_{driver} P(driver, sequence)$$

7. Procédé selon l'une quelconque des revendications 1 à 6, **caractérisé en ce que**, dans le cas où aucune concordance du conducteur actuel avec un conducteur du groupe de référence n'a lieu, un antidémarrage du véhicule est activé.

8. Procédé selon l'une quelconque des revendications 1 à 7, **caractérisé en ce qu'**après l'identification du conducteur, des réglages individuels au conducteur sont effectués dans le véhicule.

9. Appareil de commande dans un véhicule pour la mise en œuvre du procédé selon l'une quelconque des revendications 1 à 8, dans lequel des grandeurs caractéristiques ou d'état (x) du véhicule peuvent être fournies à l'appareil de commande (3, 7) en tant que grandeurs d'entrée et un signal peut être généré dans l'appareil de commande (3, 7), lequel identifie le conducteur actuel au sein du groupe de référence.

10. Véhicule comportant un appareil de commande selon la revendication 9.

11. Produit programme informatique comprenant un code de programme qui est conçu pour exécuter des étapes du procédé selon l'une quelconque des revendications 1 à 8 lorsque le produit programme informatique est exécuté sur un appareil de commande (3, 7) selon la revendication 9.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016218719 A1
- US 10417838 B2
- US 20100209890 A1
- CN 111738337 A
- EP 2261096 A